# EUROPEAN PATENT SPECIFICATION

(11) **EP 4 570 355 B1**
(45) Date of publication and mention of the grant of the patent: **29.04.2026**
(21) Application number: 24167056.1
(22) Date of filing: 27.03.2024
(51) Int. Cl.: B01D 53/14, B01D 53/18

(54) **ABSORPTION TOWER AND WASTE GAS RECOVERY SYSTEM**
ABSORPTIONSTURM UND ABGASRÜCKGEWINNUNGSSYSTEM
TOUR D'ABSORPTION ET SYSTÈME DE RÉCUPÉRATION DE GAZ D'ÉCHAPPEMENT

(30) Priority: 13.12.2023 CN 202311717753
(43) Date of publication of application: 18.06.2025
(73) Proprietor: Guangdong Tian Rui De New Energy Technology Co., Ltd., Shenzhen 518000 (CN)
(72) Inventor: YAN, Yongjun, Shenzhen (CN); LI, Tianyou, Shenzhen (CN); MENG, Jili, Shenzhen (CN); ZHU, Chunfang, Shenzhen (CN); HUANG, Chunpeng, Shenzhen (CN)
(74) Representative: Zaboliene, Reda

(56) References cited:
- WO-A2-2018/172407
- CN-A- 108 452 639
- US-A1- 2021 146 297
- US-B2- 10 076 722
- US-B2- 11 077 401

## Description

### TECHNICAL FIELD

The present invention relates to the field of chemical recovery technologies, and in particular, to an absorption tower and a waste gas recovery system.

### BACKGROUND

N-Methylpyrrolidone (NMP) is an important chemical solvent with low toxicity, high boiling point, a strong dissolving capability, and good selectivity and stability, and is a most commonly used solvent in production of a metal ion battery.

A commonly used process for NMP waste gas recovery is a water-washing process. When a conventional water-washing process satisfies an emission standard of exhaust gas in NMP treatment, either subsequent treatment is difficult due to high water content of recovered waste liquid, or the exhaust gas is prone to a failure in satisfying the emission standard when water content of NMP waste liquid is low. Especially in an NMP water-washing gas-return process, if it is ensured that the exhaust gas satisfies the emission standard, humidity of treated gas that returns to a coating machine from an absorption tower is excessively high, resulting in complex treatment in subsequent processes and high costs. Moreover, the conventional process uses multi-stage circulation operations, the tower device is high or occupies a large area, an experienced engineer is needed for control of the absorption tower, and stability of product quality is low. US10076722 B2 discloses a NMP waste gas recovery system comprising an absorption tower in which a NMP-containing gas countercurrently contacts washing water in a tower containing two fillers vertically arranged in series.

### SUMMARY

A technical issue to be resolved in the present invention is to provide a miniaturized absorption tower with high recovery benefit, and a waste gas recovery system having the absorption tower.

To resolve the foregoing technical issue, technical solution 1 used in the present invention according to appended claim 1 is as follows: An absorption tower is provided, including an outer cylinder and at least one inner cylinder disposed inside the outer cylinder, where a filler support plate is disposed inside the outer cylinder, a gas inlet and a liquid discharge port are provided on the outer cylinder, and both the gas inlet and the liquid discharge port are located below the filler support plate; the bottom of the inner cylinder has an opening, and the inner cylinder is located above the filler support plate; a first filler is accommodated in the inner cylinder, and a second filler is accommodated in a gap between the inner cylinder and the outer cylinder; a first liquid distributor and a first mist eliminator are disposed inside the inner cylinder, the first liquid distributor is located above the first filler, the first mist eliminator is located above the first liquid distributor, and a first gas outlet is provided on an upper part of the inner cylinder; and a second liquid distributor and a second mist eliminator are disposed inside the outer cylinder, the second liquid distributor is located above the second filler, the second mist eliminator is located above the second liquid distributor, and a second gas outlet is provided on an upper part of the outer cylinder.

To resolve the foregoing technical issue, technical solution 2 used in the present invention according to appended claim 8 is as follows: A waste gas recovery system is provided, including the foregoing absorption tower.

Beneficial effects of the present invention are as follows: The absorption tower is novel in structure, to ensure that an emission standard of treated exhaust gas is satisfied while water content of comprehensive waste liquid is small. Continuous material discharge and production and continuous operation can be achieved without a need for multi-stage tower dumping, which helps improve recovery efficiency and recovery benefit. In addition, control is simple, and product quality is stable. Compared with a two-tower structure in a conventional technology, the structure of the absorption tower is simpler and occupies less space, which implements miniaturization.

### BRIEF DESCRIPTION OF DRAWINGS

To describe technical solutions in embodiments of the present invention or in a conventional technology more clearly, the following briefly describes accompanying drawings that are needed for descriptions of embodiments or the conventional technology. It is clear that the accompanying drawings in the following descriptions show merely some embodiments of the present invention, and a person of ordinary skill in the art may still derive other drawings from structures shown in these accompanying drawings without creative efforts.
FIG. 1 is a sectional view 1 of an absorption tower according to Embodiment 1 of the present invention;
FIG. 2 is a sectional view 2 of an absorption tower according to Embodiment 1 of the present invention;
FIG. 3 is a schematic diagram of a structure of a local area of a first liquid distributor in an absorption tower according to Embodiment 1 of the present invention;
FIG. 4 is a schematic diagram of a structure of a local area of a second liquid distributor in an absorption tower according to Embodiment 1 of the present invention;
FIG. 5 is a simplified schematic diagram of a structure of a waste gas recovery system according to Embodiment 1 of the present invention; and
FIG. 6 is a simplified schematic diagram of a structure of a waste gas recovery system according to Embodiment 2 of the present invention.

### Reference numerals:

1: outer cylinder; 2: inner cylinder; 3: filler support plate; 4: first filler; 5: second filler; 6: first liquid distributor; 7: second liquid distributor; 71: annular body; 72: liquid leakage opening; 73: gas rising tube; 74: overflow opening; 8: first mist eliminator; 9: second mist eliminator; 10: first gas outlet; 11: second gas outlet; 12: first liquid inlet; 13: second liquid inlet; 14: gas inlet; 15: liquid discharge port; 16: liquid inlet; 17: exhaust fan; 18: return fan; 19: waste heat recovery heat exchanger; 20: surface cooler; 21: liquid-to-liquid heat exchanger.

### DESCRIPTION OF EMBODIMENTS

Achievement of objectives, functional features, and advantages of the present invention are further described with reference to embodiments and accompanying drawings.

The following clearly and completely describes technical solutions in embodiments of the present invention with reference to the accompanying drawings in embodiments of the present invention. It is clear that the described embodiments are merely some but not all of embodiments of the present invention.

It should be noted that, if embodiments of the present invention involve directional indications such as above, below, left, right, front, and back, the directional indications are merely used to explain relative position relationships, movement conditions, or the like of components in a specific attitude, as shown in the accompanying drawings. If the specific attitude changes, the directional indications change accordingly.

In addition, if there are descriptions involving "first", "second", and the like in embodiments of the present invention, the descriptions of "first", "second", and the like are merely intended for an objective of description, and shall not be understood as an indication or implication of relative importance or implicit indication of a quantity of indicated technical features. Therefore, a feature defined by "first" or "second" may explicitly or implicitly include at least one feature.

In addition, "and/or" in this specification means that three parallel solutions are included. For example, "A and/or B" indicates the following three solutions: Only A exists, only B exists, or both A and B exist. In addition, the technical solutions in various embodiments can be combined with each other, which should be based on implementation by a person of ordinary skill in the art. When the combination of technical solutions is contradictory or cannot be implemented, it should be considered that such a combination of technical solutions does not exist, and is not within the protection scope claimed by the present invention.

In this application, unless otherwise specified and limited, terms such as "mount", "link", "connect", and "fasten" should be understood broadly. For example, the term "connect" may indicate a fixed connection, a detachable connection, or integration; may indicate a mechanical connection or an electrical connection; may indicate a direct connection or an indirect connection implemented by using an intermediate medium; or may indicate communication inside two elements or an interaction relationship between two elements. A person of ordinary skill in the art may interpret specific meanings of the foregoing terms in this application according to specific cases.

### Embodiment 1

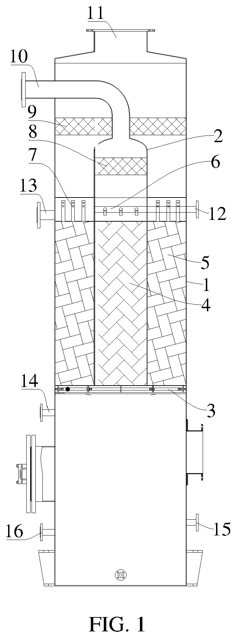

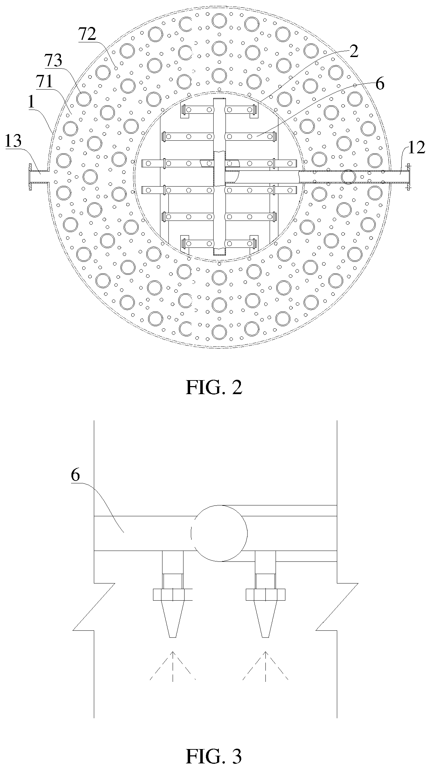

Refer to FIG. 1 to FIG. 5. Embodiment 1 of the present invention provides an absorption tower that can be used in a recovery process of NMP gas, DMAC gas, or other similar types of gas.

As shown in FIG. 1, the absorption tower includes an outer cylinder 1 and at least one inner cylinder 2 disposed inside the outer cylinder 1. A filler support plate 3 is disposed inside the outer cylinder 1, a gas inlet 14 and a liquid discharge port 15 are provided on the outer cylinder 1, and both the gas inlet 14 and the liquid discharge port 15 are located below the filler support plate 3. The bottom of the inner cylinder 2 has an opening, and the inner cylinder 2 is located above the filler support plate 3. A first filler 4 is accommodated in the inner cylinder 2, and a second filler 5 is accommodated in a gap between the inner cylinder 2 and the outer cylinder 1. A first liquid distributor 6 and a first mist eliminator 8 are disposed inside the inner cylinder 2, the first liquid distributor 6 is located above the first filler 4, the first mist eliminator 8 is located above the first liquid distributor 6, and a first gas outlet 10 is provided on an upper part of the inner cylinder 2. A second liquid distributor 7 and a second mist eliminator 9 are disposed inside the outer cylinder 1, the second liquid distributor 7 is located above the second filler 5, the second mist eliminator 9 is located above the second liquid distributor 7, and a second gas outlet 11 is provided on an upper part of the outer cylinder 1. In this embodiment, there is one inner cylinder 2. In other embodiments, there may be a plurality of inner cylinders 2. A specific quantity of inner cylinders 2 is set according to an actual requirement.

A requirement for recovery of the foregoing similar gas is as follows: One part of the gas needs to be recycled, and the other part of the gas needs to be treated and discharged. In an actual recovery process, it is often difficult to achieve a balance between these two parts if they are treated together. This is because the to-be-recycled gas does not have high requirements for solvent content (for example, NMP content is within 200 ppm, which is easily achievable), but may have strict requirements for water content (such as dew point of 15 °C), while the to-be-discharged gas has strict requirements for the solvent content (for example, NMP recycled gas content is within a few ppm), but has no requirement for the dew point. In this absorption tower, the inner cylinder 2 and the outer cylinder 1 are used separately for treatment, so that a better effect can be achieved. Specifically, gas discharged from the first gas outlet 10 is treated gas that satisfies a standard and that is to be discharged to the outside, and gas discharged from the second gas outlet 11 is to-be-recycled gas.

Refer to FIG. 1 to FIG. 3. A first liquid inlet 12 is further provided on the outer cylinder 1. The first liquid inlet 12 is connected to the first liquid distributor 6. The first liquid distributor 6 is a tube distributor, a pan distributor, or a trough pan distributor. A second liquid inlet 13 is further provided on the outer cylinder 1. The second liquid inlet 13 is connected to the second liquid distributor 7. The second liquid distributor 7 is a pan distributor or a trough pan distributor.

Refer to FIG. 1, FIG. 2, and FIG. 4. In this embodiment, the second liquid distributor 7 is a pan distributor. The second liquid distributor 7 includes an annular body 71, and the annular body 71 is sleeved on the inner cylinder 2. A plurality of liquid leakage openings 72 and a plurality of gas rising tubes 73 are provided on the annular body 71. Several overflow openings 74 are provided on the gas rising tube 73, and the overflow openings 74 can prevent a liquid level of liquid carried by the annular body 71 from being excessively high, to ensure that the second liquid distributor 7 can work stably for a long time. Preferably, both an axial direction of the gas rising tube 73 and an axial direction of the liquid leakage opening 72 are perpendicular to the annular body 71. Because a gas flow amount and a liquid flow amount of the outer cylinder 1 are large, the second liquid distributor 7 of such a structure has the following advantages: Gas resistance is small, operating pressure is reduced, the structure is compact, and no interference exists between the second liquid distributor 7 and the first liquid distributor 6. Operating elasticity is high, and an elasticity ratio can reach 10. An unevenness degree of the liquid flow amount can be less than 10%, waste liquid containing a small quantity of solid impurities can be introduced to absorb waste gas, and adaptability is good.

Optionally, there are a plurality of overflow openings 74 on the gas rising tube 73, and there are height differences between a plurality of overflow openings 74 on one gas rising tube 73.

In an embodiment, widths of the overflow openings 74 gradually increase from bottom to top, so that the overflow openings 74 can automatically adjust an overflow speed based on the liquid level of the liquid carried by the annular body 71.

Optionally, a liquid inlet 16 is further provided on the outer cylinder 1, and the liquid inlet 16 is located below the filler support plate 3.

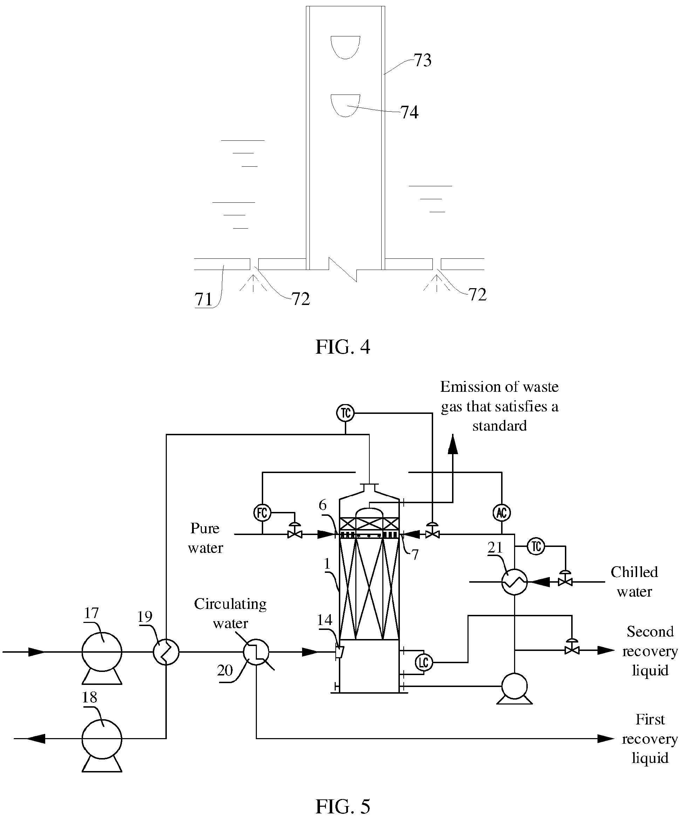

As shown in FIG. 5, this embodiment further provides a waste gas recovery system. The waste gas recovery system includes the foregoing absorption tower, an exhaust fan 17, a return fan 18, a waste heat recovery heat exchanger 19, a surface cooler 20, and a liquid-to-liquid heat exchanger 21. The exhaust fan 17 is connected to one end of a first channel of the waste heat recovery heat exchanger 19, and the other end of the first channel of the waste heat recovery heat exchanger 19 is connected to an inlet of the surface cooler 20. A first outlet of the surface cooler 20 is connected to the gas inlet 14 of the outer cylinder 1, and first recovery liquid is discharged from a second outlet of the surface cooler 20. Preferably, circulating water is introduced into the surface cooler 20 to cool fluid that flows through the surface cooler 20. Gas is discharged to the outside from the first gas outlet 10 of the inner cylinder 2. The second gas outlet 11 of the outer cylinder 1 is connected to one end of a second channel of the waste heat recovery heat exchanger 19, and the other end of the second channel of the waste heat recovery heat exchanger 19 is connected to the return fan 18. One part of liquid discharged from the liquid discharge port 15 is used as second recovery liquid, the other part is introduced into one end of a first channel of the liquid-to-liquid heat exchanger 21, and the other end of the first channel of the liquid-to-liquid heat exchanger 21 is connected to the second liquid distributor 7. Chilled water flows in a second channel of the liquid-to-liquid heat exchanger 21, and pure water is introduced into the first liquid distributor 6.

Recovery of NMP waste gas is used as an example below to describe the technical solution in more detail for readers to understand the technical solution more fully. However, it should be noted that the absorption tower is not used only for recovery of the NMP waste gas, and the absorption tower can be used for recovery of the foregoing similar gas.

Outer diameters of the inner cylinder 2 and the outer cylinder 1 depend on a treatment amount and a discharge amount of a gas-return coating machine. Gas treated by the inner cylinder 2 mainly needs to satisfy a standard and to be discharged to the outside, and therefore the lower NMP content of the gas is, the better. The pure water is sprayed to absorb NMP in gas introduced into the inner cylinder 2, and a concentration of the NMP in final waste gas to be discharged to the outside can be very low. In this embodiment, the first liquid distributor 6 in the inner cylinder 2 is a tube distributor. The tube distributor has excellent liquid distribution performance and is suitable for a scenario with many spray points and low liquid load, and operating elasticity is high. Certainly, in actual application, the first liquid distributor 6 may be another type of liquid distributor based on a process condition. For absorption of the NMP, an amount of the added pure water needs to be controlled. When the added amount is small, a concentration of an NMP solution produced at the bottom of the tower is high, liquid load in the inner cylinder 2 is low, a gas flow amount is large, and absorption liquid has no impurity (because the pure water is introduced into the first liquid distributor 6). In this case, a tube distributor is more suitable. Certainly, for absorption of other substances such as DMAC, more water needs to be added, and in this case, a pan distributor or a trough pan distributor may be used. Gas in the annular gap between the outer cylinder 1 and the inner cylinder 2 is mainly used to absorb the NMP in the waste gas, and control humidity of gas that returns to the coating machine. Cooled fluid is used for circulation and absorption, so that NMP content of the return gas can be less than 200 ppm, and the humidity of the return gas also satisfies a requirement. Refer to FIG. 1, FIG. 2, and FIG. 5. The second liquid distributor 7 in the outer cylinder 1 is a customized pan distributor. The pan distributor has high operating elasticity (high elasticity means that a different working condition results in a large change in an amount of liquid that passes through the liquid distributor, for example, a change from 50000 kg/hr to 100000 kg/hr), and is not prone to blocking. Certainly, another type of liquid distributor, such as a trough pan distributor, may be chosen based on a process condition.

The second liquid distributor 7 is the pan distributor for the following reasons. In the outer cylinder 1, liquid load is high (according to a calculation result of absorption of the NMP in the outer cylinder 1, if there is a need to cool the gas in the outer cylinder 1 to 15 °C, in a condition in which a temperature difference of the heat exchanger is 5 °C, a large quantity of liquid is needed for heat exchange and subsequent spraying and absorption, and therefore the liquid load is high), a gas flow amount is large, and circulating liquid contains a trace quantity of solid impurities (impurities carried by the waste gas from the coating machine, a trace quantity of soluble lithium salts, and insoluble particulate matter; if a tube distributor with a nozzle is used, the distributor may be blocked over time).

In the waste gas recovery system, the waste gas containing the NMP passes through the exhaust fan 17, and enters the absorption tower after cooled by the waste heat recovery heat exchanger 19 and the surface cooler 20 to a specific temperature. In this process, first NMP recovery liquid can be discharged from the surface cooler 20. One part of the NMP waste gas discharged from the surface cooler 20 reaches the standard through absorption by the pure water sprayed by the inner cylinder 2, and then is discharged. The other part of the NMP waste gas passes through the annular gap between the inner cylinder 2 and the outer cylinder 1, and is treated through absorption by cooled high-concentration NMP circulating waste liquid (the high-concentration NMP circulating waste liquid is introduced into the second filler 5 through the second liquid distributor 7). Most of the NMP in the waste gas is absorbed, and the waste gas discharged from the second gas outlet 11 of the outer cylinder 1 returns to the coating machine through the return fan 18. Waste liquid falling along the first filler 4 in the inner cylinder 2 and waste liquid falling along the second filler 5 in the outer cylinder 1 fall onto the bottom of the tower and mix to form a mixture. One part of the mixture, as a product (that is, second NMP recovery liquid), is discharged out of the tower, and the other part is cooled by the liquid-to-liquid heat exchanger 21 to a specified temperature (usually 15 °C) and then enters the second liquid distributor 7 to implement cyclic spraying. In actual operation, as long as temperature of the return gas discharged from the outer cylinder 1 is controlled, the humidity of the return gas can be ensured to satisfy a process requirement. The amount of the added pure water is controlled in real time based on a concentration of the second NMP recovery liquid.

### Embodiment 2

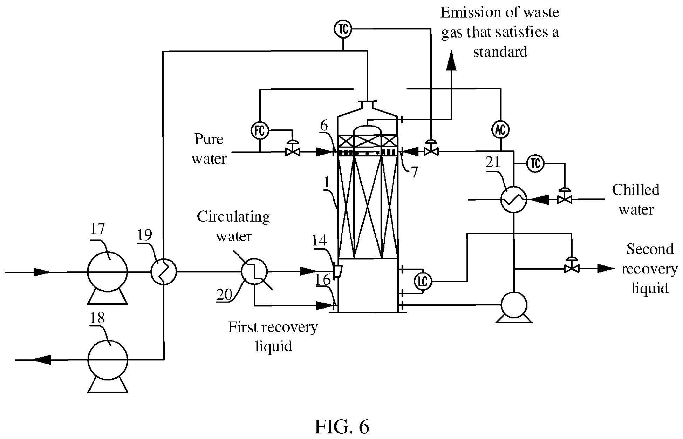

Refer to FIG. 6. Embodiment 2 of the present invention is a parallel technical solution of the waste gas recovery system in Embodiment 1. The only difference from the waste gas recovery system in Embodiment 1 is as follows: A liquid inlet 16 is further provided on the outer cylinder 1, and the liquid inlet 16 is located below the filler support plate 3. In this case, the second outlet of the surface cooler 20 in the waste gas recovery system is connected to the liquid inlet 16 of the outer cylinder 1. Such a waste gas recovery system is suitable for an application scenario with a lower requirement for the humidity of the gas that returns to the coating machine.

The foregoing embodiments are merely optional embodiments of the present invention, and are not intended to limit the patent scope of the present invention.

## Claims

1. An absorption tower, comprising an outer cylinder and at least one inner cylinder disposed inside the outer cylinder, wherein a filler support plate is disposed inside the outer cylinder, a gas inlet and a liquid discharge port are provided on the outer cylinder, and both the gas inlet and the liquid discharge port are located below the filler support plate; the bottom of the inner cylinder has an opening, and the inner cylinder is located above the filler support plate; a first filler is accommodated in the inner cylinder, and a second filler is accommodated in a gap between the inner cylinder and the outer cylinder; a first liquid distributor and a first mist eliminator are disposed inside the inner cylinder, the first liquid distributor is located above the first filler, the first mist eliminator is located above the first liquid distributor, and a first gas outlet is provided on an upper part of the inner cylinder; and a second liquid distributor and a second mist eliminator are disposed inside the outer cylinder, the second liquid distributor is located above the second filler, the second mist eliminator is located above the second liquid distributor, and a second gas outlet is provided on an upper part of the outer cylinder.

2. The absorption tower according to claim 1, wherein a first liquid inlet is further provided on the outer cylinder, the first liquid inlet is connected to the first liquid distributor, and the first liquid distributor is a tube distributor, a pan distributor, or a trough pan distributor.

3. The absorption tower according to claim 1, wherein a second liquid inlet is further provided on the outer cylinder, the second liquid inlet is connected to the second liquid distributor, and the second liquid distributor is a pan distributor or a trough pan distributor.

4. The absorption tower according to claim 3, wherein the second liquid distributor is a pan distributor, the second liquid distributor comprises an annular body, the annular body is sleeved on the inner cylinder, a plurality of liquid leakage openings and a plurality of gas rising tubes are provided on the annular body, and several overflow openings are provided on the gas rising tube.

5. The absorption tower according to claim 4, wherein there are a plurality of overflow openings on the gas rising tube, and there are height differences between a plurality of overflow openings on one gas rising tube.

6. The absorption tower according to claim 4, wherein widths of the overflow openings gradually increase from bottom to top.

7. The absorption tower according to claim 1, wherein a liquid inlet is further provided on the outer cylinder, and the liquid inlet is located below the filler support plate.

8. A waste gas recovery system, comprising the absorption tower according to any one of claims 1 to 6.

9. The waste gas recovery system according to claim 8, further comprising an exhaust fan, a return fan, a waste heat recovery heat exchanger, a surface cooler, and a liquid-to-liquid heat exchanger, wherein the exhaust fan is connected to one end of a first channel of the waste heat recovery heat exchanger, and the other end of the first channel of the waste heat recovery heat exchanger is connected to an inlet of the surface cooler; a first outlet of the surface cooler is connected to the gas inlet of the outer cylinder, and first recovery liquid is discharged from a second outlet of the surface cooler; gas is discharged to the outside from the first gas outlet of the inner cylinder; the second gas outlet of the outer cylinder is connected to one end of a second channel of the waste heat recovery heat exchanger, and the other end of the second channel of the waste heat recovery heat exchanger is connected to the return fan; one part of liquid discharged from the liquid discharge port is used as second recovery liquid, the other part is introduced into one end of a first channel of the liquid-to-liquid heat exchanger, and the other end of the first channel of the liquid-to-liquid heat exchanger is connected to the second liquid distributor; and chilled water flows in a second channel of the liquid-to-liquid heat exchanger, and pure water is introduced into the first liquid distributor.

10. The waste gas recovery system according to claim 8, wherein a liquid inlet is further provided on the outer cylinder, and the liquid inlet is located below the filler support plate; an exhaust fan, a return fan, a waste heat recovery heat exchanger, a surface cooler, and a liquid-to-liquid heat exchanger are further comprised; the exhaust fan is connected to one end of a first channel of the waste heat recovery heat exchanger, and the other end of the first channel of the waste heat recovery heat exchanger is connected to an inlet of the surface cooler; a first outlet of the surface cooler is connected to the gas inlet of the outer cylinder, and a second outlet of the surface cooler is connected to the liquid inlet of the outer cylinder; gas is discharged to the outside from the first gas outlet of the inner cylinder; the second gas outlet of the outer cylinder is connected to one end of a second channel of the waste heat recovery heat exchanger, and the other end of the second channel of the waste heat recovery heat exchanger is connected to the return fan; one part of liquid discharged from the liquid discharge port is used as second recovery liquid, the other part is introduced into one end of a first channel of the liquid-to-liquid heat exchanger, and the other end of the first channel of the liquid-to-liquid heat exchanger is connected to the second liquid distributor; and chilled water flows in a second channel of the liquid-to-liquid heat exchanger, and pure water is introduced into the first liquid distributor.

## Patentansprüche

1. Ein Absorptionsturm, umfassend einen Außenzylinder und mindestens einen im Inneren des Außenzylinders angeordneten Innenzylinder, wobei eine Füllkörper-Stützplatte im Inneren des Außenzylinders angeordnet ist, ein Gaseinlass und eine Flüssigkeitsablassöffnung am Außenzylinder vorgesehen sind und sich sowohl der Gaseinlass als auch die Flüssigkeitsablassöffnung unterhalb der Füllkörper-Stützplatte befinden; der Boden des Innenzylinders eine Öffnung aufweist und der Innenzylinder oberhalb der Füllkörper-Stützplatte angeordnet ist; ein erster Füllkörper im Innenzylinder untergebracht ist und ein zweiter Füllkörper in einem Spalt zwischen dem Innenzylinder und dem Außenzylinder untergebracht ist; ein erster Flüssigkeitsverteiler und ein erster Tropfenabscheider im Inneren des Innenzylinders angeordnet sind, wobei der erste Flüssigkeitsverteiler oberhalb des ersten Füllkörpers angeordnet ist, der erste Tropfenabscheider oberhalb des ersten Flüssigkeitsverteilers angeordnet ist und ein erster Gasauslass an einem oberen Teil des Innenzylinders vorgesehen ist; und ein zweiter Flüssigkeitsverteiler und ein zweiter Tropfenabscheider im Inneren des Außenzylinders angeordnet sind, wobei der zweite Flüssigkeitsverteiler oberhalb des zweiten Füllkörpers angeordnet ist, der zweite Tropfenabscheider oberhalb des zweiten Flüssigkeitsverteilers angeordnet ist und ein zweiter Gasauslass an einem oberen Teil des Außenzylinders vorgesehen ist.

2. Der Absorptionsturm nach Anspruch 1, wobei ferner ein erster Flüssigkeitseinlass am Außenzylinder vorgesehen ist, der erste Flüssigkeitseinlass mit dem ersten Flüssigkeitsverteiler verbunden ist und der erste Flüssigkeitsverteiler ein Rohrverteiler, ein Bodenverteiler oder ein Rinnen-Bodenverteiler ist.

3. Der Absorptionsturm nach Anspruch 1, wobei ferner ein zweiter Flüssigkeitseinlass am Außenzylinder vorgesehen ist, der zweite Flüssigkeitseinlass mit dem zweiten Flüssigkeitsverteiler verbunden ist und der zweite Flüssigkeitsverteiler ein Bodenverteiler oder ein Rinnen-Bodenverteiler ist.

4. Der Absorptionsturm nach Anspruch 3, wobei der zweite Flüssigkeitsverteiler ein Bodenverteiler ist, der zweite Flüssigkeitsverteiler einen Ringkörper umfasst, der Ringkörper auf den Innenzylinder aufgeschoben ist, eine Vielzahl von Flüssigkeitslecköffnungen und eine Vielzahl von Gassteigrohren auf dem Ringkörper vorgesehen sind und mehrere Überlauföffnungen an dem Gassteigrohr vorgesehen sind.

5. Der Absorptionsturm nach Anspruch 4, wobei eine Vielzahl von Überlauföffnungen an dem Gassteigrohr vorhanden ist und Höhenunterschiede zwischen einer Vielzahl von Überlauföffnungen an einem Gassteigrohr bestehen.

6. Der Absorptionsturm nach Anspruch 4, wobei Breiten der Überlauföffnungen von unten nach oben allmählich zunehmen.

7. Der Absorptionsturm nach Anspruch 1, wobei ferner ein Flüssigkeitseinlass am Außenzylinder vorgesehen ist und der Flüssigkeitseinlass unterhalb der Füllkörper-Stützplatte angeordnet ist.

8. Ein Abgasrückgewinnungssystem, umfassend den Absorptionsturm nach einem der Ansprüche 1 bis 6.

9. Das Abgasrückgewinnungssystem nach Anspruch 8, ferner umfassend einen Abluftventilator, einen Rückluftventilator, einen Abwärmerückgewinnungs-Wärmetauscher, einen Oberflächenkühler und einen Flüssigkeits-Flüssigkeits-Wärmetauscher, wobei der Abluftventilator mit einem Ende eines ersten Kanals des Abwärmerückgewinnungs-Wärmetauschers verbunden ist und das andere Ende des ersten Kanals des Abwärmerückgewinnungs-Wärmetauschers mit einem Einlass des Oberflächenkühlers verbunden ist; ein erster Auslass des Oberflächenkühlers mit dem Gaseinlass des Außenzylinders verbunden ist und eine erste Rückgewinnungsflüssigkeit aus einem zweiten Auslass des Oberflächenkühlers abgeführt wird; Gas aus dem ersten Gasauslass des Innenzylinders nach außen abgeleitet wird; der zweite Gasauslass des Außenzylinders mit einem Ende eines zweiten Kanals des Abwärmerückgewinnungs-Wärmetauschers verbunden ist und das andere Ende des zweiten Kanals des Abwärmerückgewinnungs-Wärmetauschers mit dem Rückluftventilator verbunden ist; ein Teil der aus der Flüssigkeitsablassöffnung abgeführten Flüssigkeit als zweite Rückgewinnungsflüssigkeit verwendet wird, der andere Teil in ein Ende eines ersten Kanals des Flüssigkeits-Flüssigkeits-Wärmetauschers eingeleitet wird und das andere Ende des ersten Kanals des Flüssigkeits-Flüssigkeits-Wärmetauschers mit dem zweiten Flüssigkeitsverteiler verbunden ist; und Kaltwasser in einem zweiten Kanal des Flüssigkeits-Flüssigkeits-Wärmetauschers fließt und reines Wasser in den ersten Flüssigkeitsverteiler eingeleitet wird.

10. Das Abgasrückgewinnungssystem nach Anspruch 8, wobei ferner ein Flüssigkeitseinlass am Außenzylinder vorgesehen ist und der Flüssigkeitseinlass unterhalb der Füllkörper-Stützplatte angeordnet ist; ferner ein Abluftventilator, einen Rückluftventilator, einen Abwärmerückgewinnungs-Wärmetauscher, einen Oberflächenkühler und einen Flüssigkeits-Flüssigkeits-Wärmetauscher umfassend; wobei der Abluftventilator mit einem Ende eines ersten Kanals des Abwärmerückgewinnungs-Wärmetauschers verbunden ist und das andere Ende des ersten Kanals des Abwärmerückgewinnungs-Wärmetauschers mit einem Einlass des Oberflächenkühlers verbunden ist; ein erster Auslass des Oberflächenkühlers mit dem Gaseinlass des Außenzylinders verbunden ist und ein zweiter Auslass des Oberflächenkühlers mit dem Flüssigkeitseinlass des Außenzylinders verbunden ist; Gas aus dem ersten Gasauslass des Innenzylinders nach außen abgeleitet wird; der zweite Gasauslass des Außenzylinders mit einem Ende eines zweiten Kanals des Abwärmerückgewinnungs-Wärmetauschers verbunden ist und das andere Ende des zweiten Kanals des Abwärmerückgewinnungs-Wärmetauschers mit dem Rückluftventilator verbunden ist; ein Teil der aus der Flüssigkeitsablassöffnung abgeführten Flüssigkeit als zweite Rückgewinnungsflüssigkeit verwendet wird, der andere Teil in ein Ende eines ersten Kanals des Flüssigkeits-Flüssigkeits-Wärmetauschers eingeleitet wird und das andere Ende des ersten Kanals des Flüssigkeits-Flüssigkeits-Wärmetauschers mit dem zweiten Flüssigkeitsverteiler verbunden ist; und Kaltwasser in einem zweiten Kanal des Flüssigkeits-Flüssigkeits-Wärmetauschers fließt und reines Wasser in den ersten Flüssigkeitsverteiler eingeleitet wird.

## Revendications

1. Une tour d'absorption, comprenant un cylindre extérieur et au moins un cylindre intérieur disposé à l'intérieur du cylindre extérieur, dans laquelle une plaque de support de garnissage est disposée à l'intérieur du cylindre extérieur, une entrée de gaz et un orifice de décharge de liquide sont prévus sur le cylindre extérieur, et l'entrée de gaz ainsi que l'orifice de décharge de liquide sont tous deux situés au-dessous de la plaque de support de garnissage; la base du cylindre intérieur présente une ouverture, et le cylindre intérieur est situé au-dessus de la plaque de support de garnissage; un premier garnissage est logé dans le cylindre intérieur, et un second garnissage est logé dans un espace entre le cylindre intérieur et le cylindre extérieur; un premier distributeur de liquide et un premier dévésiculeur sont disposés à l'intérieur du cylindre intérieur, le premier distributeur de liquide est situé au-dessus du premier garnissage, le premier dévésiculeur est situé au-dessus du premier distributeur de liquide, et une première sortie de gaz est prévue sur une partie supérieure du cylindre intérieur; et un second distributeur de liquide et un second dévésiculeur sont disposés à l'intérieur du cylindre extérieur, le second distributeur de liquide est situé au-dessus du second garnissage, le second dévésiculeur est situé au-dessus du second distributeur de liquide, et une seconde sortie de gaz est prévue sur une partie supérieure du cylindre extérieur.

2. La tour d'absorption selon la revendication 1, dans laquelle une première entrée de liquide est en outre prévue sur le cylindre extérieur, la première entrée de liquide est reliée au premier distributeur de liquide, et le premier distributeur de liquide est un distributeur à tubes, un distributeur à plateau ou un distributeur à plateau à auges.

3. La tour d'absorption selon la revendication 1, dans laquelle une seconde entrée de liquide est en outre prévue sur le cylindre extérieur, la seconde entrée de liquide est reliée au second distributeur de liquide, et le second distributeur de liquide est un distributeur à plateau ou un distributeur à plateau à auges.

4. La tour d'absorption selon la revendication 3, dans laquelle le second distributeur de liquide est un distributeur à plateau, le second distributeur de liquide comprend un corps annulaire, le corps annulaire est emmanché sur le cylindre intérieur, une pluralité d'ouvertures de fuite de liquide et une pluralité de tubes de montée de gaz sont prévus sur le corps annulaire, et plusieurs ouvertures de trop-plein sont prévues sur le tube de montée de gaz.

5. La tour d'absorption selon la revendication 4, dans laquelle il existe une pluralité d'ouvertures de trop-plein sur le tube de montée de gaz, et il existe des différences de hauteur entre une pluralité d'ouvertures de trop-plein sur un même tube de montée de gaz.

6. La tour d'absorption selon la revendication 4, dans laquelle les largeurs des ouvertures de trop-plein augmentent progressivement de bas en haut.

7. La tour d'absorption selon la revendication 1, dans laquelle une entrée de liquide est en outre prévue sur le cylindre extérieur, et l'entrée de liquide est située au-dessous de la plaque de support de garnissage.

8. Un système de récupération de gaz d'échappement, comprenant la tour d'absorption selon l'une quelconque des revendications 1 à 6.

9. Le système de récupération de gaz d'échappement selon la revendication 8, comprenant en outre un ventilateur d'extraction, un ventilateur de retour, un échangeur de chaleur de récupération de chaleur résiduelle, un refroidisseur de surface et un échangeur de chaleur liquide-liquide, dans lequel le ventilateur d'extraction est relié à une extrémité d'un premier canal de l'échangeur de chaleur de récupération de chaleur résiduelle, et l'autre extrémité du premier canal de l'échangeur de chaleur de récupération de chaleur résiduelle est reliée à une entrée du refroidisseur de surface; une première sortie du refroidisseur de surface est reliée à l'entrée de gaz du cylindre extérieur, et un premier liquide de récupération est déchargé d'une seconde sortie du refroidisseur de surface; le gaz est déchargé vers l'extérieur depuis la première sortie de gaz du cylindre intérieur; la seconde sortie de gaz du cylindre extérieur est reliée à une extrémité d'un second canal de l'échangeur de chaleur de récupération de chaleur résiduelle, et l'autre extrémité du second canal de l'échangeur de chaleur de récupération de chaleur résiduelle est reliée au ventilateur de retour; une partie du liquide déchargé de l'orifice de décharge de liquide est utilisée comme second liquide de récupération, l'autre partie est introduite dans une extrémité d'un premier canal de l'échangeur de chaleur liquide-liquide, et l'autre extrémité du premier canal de l'échangeur de chaleur liquide-liquide est reliée au second distributeur de liquide; et de l'eau glacée circule dans un second canal de l'échangeur de chaleur liquide-liquide, et de l'eau pure est introduite dans le premier distributeur de liquide.

10. Le système de récupération de gaz d'échappement selon la revendication 8, dans lequel une entrée de liquide est en outre prévue sur le cylindre extérieur, et l'entrée de liquide est située au-dessous de la plaque de support de garnissage; un ventilateur d'extraction, un ventilateur de retour, un échangeur de chaleur de récupération de chaleur résiduelle, un refroidisseur de surface et un échangeur de chaleur liquide-liquide sont en outre compris; le ventilateur d'extraction est relié à une extrémité d'un premier canal de l'échangeur de chaleur de récupération de chaleur résiduelle, et l'autre extrémité du premier canal de l'échangeur de chaleur de récupération de chaleur résiduelle est reliée à une entrée du refroidisseur de surface; une première sortie du refroidisseur de surface est reliée à l'entrée de gaz du cylindre extérieur, et une second sortie du refroidisseur de surface est reliée à l'entrée de liquide du cylindre extérieur; le gaz est déchargé vers l'extérieur depuis la première sortie de gaz du cylindre intérieur; la seconde sortie de gaz du cylindre extérieur est reliée à une extrémité d'un second canal de l'échangeur de chaleur de récupération de chaleur résiduelle, et l'autre extrémité du second canal de l'échangeur de chaleur de récupération de chaleur résiduelle est reliée au ventilateur de retour; une partie du liquide déchargé de l'orifice de décharge de liquide est utilisée comme second liquide de récupération, l'autre partie est introduite dans une extrémité d'un premier canal de l'échangeur de chaleur liquide-liquide, et l'autre extrémité du premier canal de l'échangeur de chaleur liquide-liquide est reliée au second distributeur de liquide; et de l'eau glacée circule dans un second canal de l'échangeur de chaleur liquide-liquide, et de l'eau pure est introduite dans le premier distributeur de liquide.
